(19) Europäisches Patentamt
European Patent Office
Office européen des brevets

(11) **EP 4 344 766 A1**

(12) **EUROPEAN PATENT APPLICATION**

(43) Date of publication:
**03.04.2024 Bulletin 2024/14**

(21) Application number: **23200026.5**

(22) Date of filing: **27.09.2023**

(51) International Patent Classification (IPC):
***B01D 53/56*** (2006.01)

(52) Cooperative Patent Classification (CPC):
**B01D 53/56;** B01D 53/75; B01D 53/78;
B01D 2251/104; B01D 2251/106; B01D 2251/108;
B01D 2251/20; B01D 2251/304; B01D 2251/608;
B01D 2257/404; B01D 2258/01; B01D 2258/02;
B01D 2258/0233; B01D 2258/025;
B01D 2258/0283; (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.09.2022 FI 20225845**

(71) Applicant: **Valmet Technologies Oy**
**02150 Espoo (FI)**

(72) Inventors:
• PAAVOLA, Mikko
  33900 Tampere (FI)
• VUORINEN, Ilari
  33900 Tampere (FI)

(74) Representative: **Berggren Oy**
**P.O. Box 16**
**Eteläinen Rautatiekatu 10A**
**00101 Helsinki (FI)**

(54) **METHOD FOR MINIMISING THE CONSUMPTION OF A REDUCING AGENT IN NOX REMOVAL**

(57) The present invention relates to a method for minimising consumption of a reducing agent during removal of nitrogen oxides from a gas flow in a wet scrubber (10). The method comprises leading the gas flow (F) comprising nitrogen dioxide into a first wet scrubbing stage (3), where the gas flow is contacted with a first liquid phase (11) comprising a reducing agent, wherein nitrogen dioxide is reduced into $NO_2^-$ and absorbed into the liquid phase. Then the gas flow, comprising nitrogen dioxide, is removed from the first wet scrubbing stage and led into at least one second wet scrubbing stage (4), where the gas flow is contacted with a second liquid phase (12) comprising a reducing agent, wherein nitrogen dioxide is reduced into $NO_2^-$ and absorbed into the liquid phase. The nitrogen dioxide absorption in the first wet scrubbing stage is at most 65% and in the second wet scrubbing stage at most 65%.

Figure 1

**(Cont. next page)**

(52) Cooperative Patent Classification (CPC): (Cont.)
B01D 2258/0291

**Description**

The present invention relates to a method for minimising the consumption of a reducing agent in NOx removal according to the preamble of the enclosed independent claim.

Nitrogen oxides, NOx, is one of the main groups of pollutants present in flue gases from combustion processes or the like. If nitrogen oxides are released to the atmosphere, they may react with moisture and form nitric acid, which may lead to occurrence of acidic rain. Furthermore, NOx may react with volatile organic compounds in the atmosphere and form ozone. Increased ozone levels in the troposphere cause smog as well as adversary health effects in humans.

Most countries have imposed regulations for permitted levels of NOx in exhaust gases released from industrial processes in order to reduce or avoid harmful NOx emissions. Consequently, in industrial processes nitrogen oxides are usually removed from the flue gases in a scrubbing step before the flue gases are released as exhaust into the atmosphere. In the scrubbing step nitrogen oxides are usually first oxidized into nitrogen dioxide, $NO_2$, which can then be washed away from the gas phase by caustic washing liquid, but the reaction is slow. The efficiency of the washing can be improved by reducing the $NO_2$ into $NO_2^-$ by using a reducing agent, such as sodium sulphite, incorporated into the washing liquid. The reduction of $NO_2$ into $NO_2^-$ significantly accelerates the reaction speed. However, it has been observed that for efficient removal of nitrogen dioxide the required reducing agent concentration in the washing liquid is high. This means that the reducing agent consumption is increased, if high degree of nitrogen oxide removal is desired. High consumption of reducing agent increases the process costs and may make it also technically less appealing.

An object of the present invention is to minimise or even eliminate the disadvantages existing in the prior art.

An object of the present invention is also to provide a method for efficient removal of nitrogen oxides from a gas flow in a wet scrubber.

Yet another object of the present invention is a method with which the consumption of a reducing agent can be minimised in removal of nitrogen oxides from a gas flow in a wet scrubber.

These objects are attained with the invention having the characteristics presented below in the characterising part of the independent claim. Some preferred embodiments of the invention are presented in the dependent claims. The features recited in the dependent claims are freely combinable with each other unless otherwise explicitly stated.

In a typical method according to the present invention for minimising consumption of a reducing agent during removal of nitrogen oxides from a gas flow in a wet scrubber, the method comprises

- leading the gas flow comprising nitrogen dioxide into a first wet scrubbing stage, where the gas flow is contacted with a first liquid phase comprising a reducing agent, wherein nitrogen dioxide is reduced into $NO_2^-$ and absorbed into the liquid phase,
- leading the said gas flow removed from the first wet scrubbing stage and comprising nitrogen dioxide into at least one second wet scrubbing stage, where the gas flow is contacted with a second liquid phase comprising a reducing agent, wherein nitrogen dioxide is reduced into $NO_2^-$ and absorbed into the liquid phase, and
- removing the gas flow from the wet scrubber,

wherein the nitrogen dioxide absorption in the first wet scrubbing stage is at most 65% and in the second wet scrubbing stage at most 65%.

Now it has been surprisingly found that by employing at least two wet scrubbing stages and limiting the nitrogen dioxide absorption to a level of at most 65% in each of these stages, it is possible to obtain at least as good, possibly even better, nitrogen oxide removal, as in the conventional one-stage process, and at the same time significantly decrease the consumption of the reducing agent. The present invention provides effective solution for treating flue gases even with high concentration of nitrogen oxides while minimising the need of the reducing agent in the wet scrubber. This saves chemical resources and is also economically beneficial.

In the present context the nitrogen dioxide absorption denotes a percentage value that can be calculated by equation (1)

$$Absorption\ (\%) = \left(1 - \frac{A}{B}\right) \times 100\% \qquad (1)$$

where

A is $NO_2$ concentration in the gas flow after a specific wet scrubbing stage, and
B is $NO_2$ concentration in the gas flow led to the same specific wet scrubbing stage.

The nitrogen dioxide absorption in the first and/or second wet scrubbing stage, or in any following scrubbing stage, may be at most 65%, preferably at most 60%, more preferably at most 55%. The nitrogen dioxide absorption may be, for example, in a range of 35 - 60%, preferably 40 - 55%, even more preferably 45 - 55%. These nitrogen absorption levels enable effective total nitrogen dioxide removal in wet scrubbing stages, while maintaining the consumption of reducing agent at low level.

The wet scrubber and the wet scrubbing comprise at least a first wet scrubbing stage and a second wet scrubbing stage, i.e. the wet scrubber comprises at least two successive wet scrubbing stages. The wet scrubber may further comprise any number of additional wet scrubbing stages after the second wet scrubbing stage, for example a third and/or fourth wet scrubbing stage. It is possible to optimise the number of additional wet scrubbing stages based on the desired final concentration of nitrogen dioxide, the desired or available reducing agent concentration and possible other process limitations. Preferably, the wet scrubber consists of a first wet scrubbing stage and a second wet scrubbing stage while providing the desired final concentration of nitrogen oxides.

The gas flow comprising nitrogen dioxide is led into a first wet scrubbing stage and contacted with a first liquid phase comprising a reducing agent. The first liquid phase may be sprayed through appropriate nozzles or the like and brought into the contact with the gas flow in countercurrent fashion, wherein nitrogen dioxide is reduced into $NO_2^-$ and absorbed into the first liquid phase. After this the first liquid phase is collected and removed from the first wet scrubbing stage to an effluent processing step. The gas flow, which still contains nitrogen dioxide is removed from the first scrubbing stage and led into at least one successive second wet scrubbing stage. In the second wet scrubbing stage the gas flow is contacted in countercurrent fashion with a second liquid phase comprising a reducing agent. The nitrogen dioxide still present in the gas flow is reduced into $NO_2^-$ and absorbed into the second liquid phase, which is collected and removed from the second wet scrubbing stage, to the effluent processing step.

According to one embodiment of the invention, the gas flow removed from the wet scrubber, i.e. gas flow after it has passed at least the first and second wet scrubbing stages, may have a final concentration of nitrogen dioxide which is at least 60%, preferably at least 65% or at least 75%, more preferably at least 80%, even more preferably at least 85%, lower than the concentration of nitrogen dioxide in the gas flow led into the first wet scrubbing stage of the wet scrubber. In some embodiments the final concentration of nitrogen dioxide may be even at least 90%, or at least 95%, lower than the concentration of nitrogen dioxide in the gas flow led into the first wet scrubbing stage of the wet scrubber. The final concentration of nitrogen dioxide may be, for example, up till 99.9% lower than the concentration of nitrogen dioxide in the gas flow led into the first wet scrubbing stage of the wet scrubber. This means that it is possible to obtain high total removal degree for nitrogen dioxide, even if the nitrogen dioxide absorption for each individual wet scrubbing stage is kept low.

The nitrogen dioxide absorption in the first wet scrubbing stage and the second wet scrubbing stage, as well as in any additional wet scrubbing stage, may be essentially equal, measured in percentages. Nitrogen absorption percentages in the first and second scrubbing stage are usually close to each or equal, but the absolute nitrogen reduction, measured in ppm, is usually lower in the second wet scrubbing stage than in the first wet scrubbing stage.

According to another embodiment, the nitrogen dioxide absorption percentage in the second wet scrubbing stage may be lower than in the first wet scrubbing stage, and the nitrogen absorption percentage in any successive additional wet scrubbing stage may be lower than the nitrogen absorption percentage in the preceding wet scrubbing stage. Even if the nitrogen absorption percentage would be lower in the second and any successive additional wet scrubbing stage, the total nitrogen dioxide absorption will still be high, and the good nitrogen removal is more effectively achieved.

According to one preferable embodiment the final concentration of nitrogen oxides, especially nitrogen dioxide, in the gas flow, which is removed from the wet scrubber, is measured, either continuously or periodically, and the nitrogen dioxide absorption in the wet scrubber is adjusted on the basis of the measurement. This means that the nitrogen dioxide absorption in the first and/or the second wet scrubbing stage and in any additional wet scrubbing stage can be controlled on the basis of the measured final concentration of nitrogen oxides. For example, it is possible to measure the concentration of nitrogen oxides, especially nitrogen dioxide, at or after the exit of the wet scrubber and adjust the concentration of the reducing agent in the liquid phase fed to the first and/or second wet scrubbing stage. Alternatively, the concentration of nitrogen oxides, especially nitrogen dioxide, may be measured at the latest at the stack. Any suitable measurement device, sensor or detector known as such for measuring nitrogen oxides, especially nitrogen dioxide, may be used. The measured concentration value can then be transferred to a control means for controlling and optionally adjusting the reducing agent concentration in the liquid phase on the basis of the measured concentration value. According to one embodiment the nitrogen oxide, especially nitrogen dioxide, concentration may be measured at the entry and at the exit of the wet scrubber, and the reducing agent concentration in the liquid phase fed to the first and/or second wet scrubbing stage is adjusted on basis of said measurements.

The present method is suitable for removal of nitrogen oxides from a gas flow. The gas flow may be a flue gas or an exhaust gas from an industrial boiler, incinerator, gas turbine, iron or steel mill process, cement manufacture, petroleum refinery or nitric acid manufacture or any gas flow with unallowably high content of nitrogen oxides. The gas flow may be, for example, an exhaust gas from a marine engine or boiler. Preferably the gas flow to be treated is a flue gas from an industrial boiler or incinerator, more preferably pulp or paper mill recovery boiler. The gas flow typically comprises nitrogen oxides (NOx) and optionally sulphur oxides (SOx) and/or compounds of trace elements, such as transition metals. The concentration of nitrogen oxides, especially nitrogen dioxide, in the gas flow to be treated is at least 10 ppm, preferably at least 20 ppm. The concentration of nitrogen oxides in the flue gas may be, for example, in a range of 10 - 1000 ppm, typically 50 - 500 ppm, more typically 75 - 300 ppm or 100 - 200 ppm.

The first liquid phase, the second liquid phase and any additional liquid used in the scrubbing stages of the wet scrubber comprises at least one a reducing agent. The reducing agent in the first and second liquid phase and any additional liquid may be same or different. Preferably the first and second liquid phase and any successive additional liquid phase comprise or consists of identical reducing agent(s).

According to one embodiment of the invention, the reducing agent may comprise sulphite, thiosulphate or any of their mixtures. The reducing agent may comprise or consist of, preferably, sulphite salt, such as sodium sulphite $Na_2SO_3$. According to an embodiment the reducing agent may comprise or consist of thiosulphate salt, such as sodium thiosulphate $Na_2S_2O_3$. Alternatively, the reducing agent may consist of a mixture of a sulphite salt, such as sodium sulphite $Na_2SO_3$, and a thiosulphate salt, such as sodium thiosulphate $Na_2S_2O_3$.

The concentration of the reducing agent in the first and the second liquid phase, as well as any successive additional liquid phase, can be lower than the reducing agent concentration providing maximal absorption nitrogen dioxide absorption. According to one embodiment of the present invention the first and/or second liquid phase, as well as any successive additional liquid phase, may have a concentration of the reducing agent at most 1 mol/l, preferably at most 0.8 mol/l or at most 0.6 mol/l. The reducing agent concentration may be, for example, in a range of 0.01 - 1 mol/l, preferably 0.05 - 0.8 mol/l, more preferably 0.1 - 0.6 mol/l. The concentration of the reducing agent in the first and/or second liquid phase, as well as any successive additional liquid phase, can be selected to provide desired nitrogen dioxide absorption at the respective wet scrubbing stage while minimising the total consumption of the reducing agent.

Preferably the first liquid phase and the second liquid phase, as well as any successive additional liquid phase, may have essentially identical concentration of the reducing agent(s). This means that same liquid phase can be used both in the first scrubbing stage and the second scrubbing stage, which keeps the process simple and easy to control.

The successive additional liquid phase(s) of the possible additional wet scrubbing stage(s) may have the same concentration of the reducing agent as the first and/or the second wet scrubbing stage, i.e. at most 1 mol/l, preferably at most 0.8 mol/l or at most 0.6 mol/l or at most 0.5 mol/l.

The first and/or second liquid phase, as well as any successive additional liquid phase, comprising the reducing agent may have a pH in the range of 6 - 8, preferably 6.5 - 7.5. The pH of the liquid phase may be adjusted by addition of suitable acid or base, such as $NH_4OH$, $Ca(OH)_2$, $CaCO_3$, NaOH or KOH, preferably $NH_4OH$ or NaOH.

According to one preferable embodiment the gas flow is contacted with an oxidizing agent in an oxidation stage, arranged before the first wet scrubbing stage. In the oxidation stage nitrogen oxides in the gas flow are oxidized into various oxidation products, mainly nitrogen dioxide. Preferably an excess of oxidizing agent is used in the oxidation stage for providing a complete or near complete oxidation of nitrogen oxides and possible other contaminants. After the oxidation stage the gas flow comprising nitrogen dioxide is led into the first wet scrubbing stage.

The oxidizing agent may be selected from ozone, hydrogen peroxide or chlorine dioxide. Preferably the oxidizing agent may be chlorine dioxide, with the following exemplary reaction path:

$$5\,NO + 2\,ClO_2 + H_2O \rightarrow 5\,NO_2 + 2\,HCl$$

In some embodiments the oxidizing agent may be ozone. Exemplary reactions in the oxidation stage, when ozone is used as oxidizing agent, include the following, of which the reaction (1) is predominant:

$$NO + O_3 \rightarrow NO_2 + O_2 \qquad (1)$$

$$NO_2 + O_3 \rightarrow NO_3 + O_2 \qquad (2)$$

$$NO_2 + NO_2 \rightarrow N_2O_4 \qquad (3)$$

$$NO_2 + NO_3 \rightarrow N_2O_5 \qquad (4)$$

Same or similar oxidation products are obtained when other oxidizing agents than chlorine dioxide or ozone is used.

The invention is described in more detail below with reference to the enclosed schematic drawing, in which

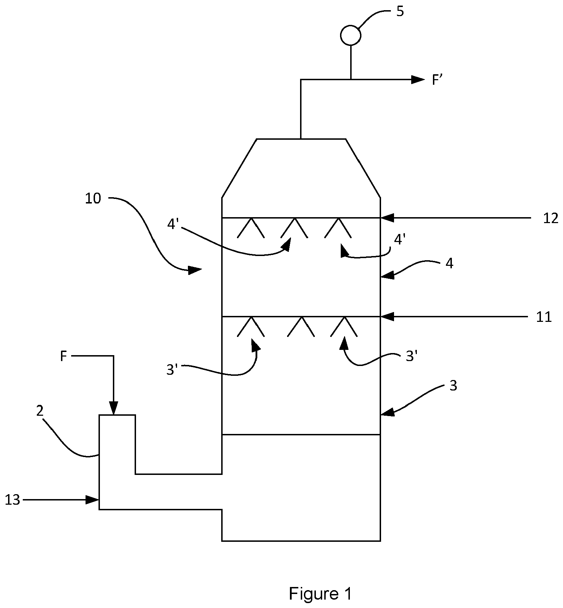

Figure 1 shows an embodiment of the present invention, and

Figure 1 shows a schematic view of a wet scrubber, operated according to the principles of the present invention for minimising the consumption of a reducing agent during removal of nitrogen oxides from a gas flow. The gas flow F to be cleaned and comprising nitrogen oxides is lead to the wet scrubber 10 through an oxidation stage 2 where the gas flow is contacted with an oxidizing agent 13. The oxidizing agent 13, such as chlorine dioxide, oxidizes nitrogen oxides in the gas flow at least partly into nitrogen dioxide.

After the oxidizing stage, the gas flow is led into a first wet scrubbing stage 3 of the wet scrubber 10. In the first wet scrubbing stage 3 the gas flow is contacted with a first liquid phase 11 which is distributed e.g. through suitable spray heads or nozzles 3'. The first liquid phase 11 comprises a reducing agent, which reduces the nitrogen dioxide in the gas flow into $NO_2^-$. The concentration of the reducing agent in the first liquid phase 11 is such that the nitrogen dioxide absorption in the first wet scrubbing stage 3 is at most 65%. The resulting $NO_2^-$ is absorbed into the first liquid phase 11 and removed from the first wet scrubbing stage 3 to an effluent processing (not shown).

After the first wet scrubbing stage 3 the gas flow which still contains nitrogen dioxide is removed from the first wet scrubbing stage and lead into at least one second wet scrubbing stage 4. At the second wet scrubbing stage 4 the gas flow is contacted with a second liquid phase 12 comprising a reducing agent, which reduces the remaining nitrogen dioxide in the gas flow into $NO_2^-$. The second liquid phase 12 is distributed e.g. through suitable spray heads or nozzles 4'. The concentration of the reducing agent in the second liquid phase is preferably similar or the same as in the first liquid phase 11. This means that same liquid may be used as the first liquid phase 11 and the second liquid phase 12. The nitrogen dioxide absorption in the second wet scrubbing stage at most 65%. The resulting $NO_2^-$ is absorbed into the second liquid phase 12 and removed from the second wet scrubbing stage 4 to the effluent processing (not shown).

After the second wet scrubbing stage 4 the cleaned gas flow F' is removed from the wet scrubber 10 and led for example to a stack. The final concentration of nitrogen oxides in the removed cleaned gas flow F' can be measured by using any appropriate sensor or sensors 5 for measuring concentration of nitrogen oxide and/or nitrogen dioxide. Such sensors are known for the skilled person. It is possible to control the total nitrogen dioxide absorption in the wet scrubber 10 on the basis of the measured final concentration of nitrogen oxides and/or nitrogen dioxides. For example, it is possible to arrange a control loop, where measured nitrogen oxide and/or nitrogen dioxide value(s) is/are used for adjusting the amount and/or concentration of reducing agent used in the first and/or second wet scrubbing stage.

Although certain embodiments and examples have been described in detail above, those having ordinary skill in the art will clearly understand that many modifications are possible in the embodiments and examples without departing from the teachings thereof. All such modifications are intended to be encompassed within the claims of the invention.

**Claims**

1. Method for minimising consumption of a reducing agent during removal of nitrogen oxides from a gas flow in a wet scrubber, the method comprising

   - leading the gas flow comprising nitrogen dioxide into a first wet scrubbing stage, where the gas flow is contacted with a first liquid phase comprising a reducing agent, wherein nitrogen dioxide is reduced into $NO_2^-$ and absorbed into the first liquid phase, which is removed from the first wet scrubbing stage to an effluent processing,
   - leading the gas flow removed from the first wet scrubbing stage and comprising nitrogen dioxide into at least one second wet scrubbing stage, where the gas flow is contacted with a second liquid phase comprising a reducing agent, wherein nitrogen dioxide is reduced into $NO_2^-$ and absorbed into the second liquid phase, which is removed from the second wet scrubbing stage to the effluent processing, and
   - removing the gas flow from the wet scrubber,

   wherein the nitrogen dioxide absorption in the first wet scrubbing stage is at most 65% and in the second wet scrubbing stage at most 65%.

2. Method according to claim 1, **characterised in that** the gas flow, which is removed from the wet scrubber, has a final concentration of nitrogen dioxide which is at least 60%, preferably at least 80%, more preferably at least 85%, lower than the concentration of nitrogen dioxide in the gas flow led into the first wet scrubbing stage.

3. Method according to claim 1 or 2, **characterised in that** the nitrogen dioxide absorption in the first and/or second wet scrubbing stage is at most 60%, preferably 45 - 55%.

4. Method according to claim 1, 2 or 3, **characterised in that** the reducing agent comprises sulphite.

5. Method according to any of preceding claims 1 - 4, **characterised in that** the reducing agent comprises thiosulphate.

6. Method according to any of preceding claims 1 - 5, **characterised in that** the first liquid phase and/or the second liquid phase has a concentration of the reducing agent at most 1 mol/l.

7. Method according to claim 6, **characterised in that** the reducing agent concentration is in a range of 0.01 - 1 mol/l.

8. Method according to any of claims 1 - 7, **characterised in that** the first liquid phase and the second liquid phase have identical concentration of the reducing agent.

9. Method according to any of preceding claims 1 - 8, **characterised in that** that the nitrogen dioxide absorption in the first wet scrubbing stage and the second wet scrubbing stage is essentially equal.

10. Method according to any of preceding claims 1 - 9, **characterised in** measuring the final concentration of nitrogen oxides in the removed gas flow and controlling the nitrogen dioxide absorption in the wet scrubbing stage and in additional wet scrubbing stage(s) on the basis of the measured final concentration.

11. Method according to any of preceding claims 1 - 10, **characterised in that** before the first wet scrubbing stage the gas flow comprising a first concentration of nitrogen oxides is contacted with an oxidizing agent and oxidizing nitrogen oxides at least partly into nitrogen dioxide.

12. Method according to claim 11, **characterised in that** the oxidizing agent is selected from ozone, hydrogen peroxide or chlorine dioxide.

13. Method according to claim 12, **characterised in that** the oxidizing agent is chlorine dioxide.

14. Method according to any of preceding claims 11 - 13, **characterised in that** the first concentration of nitrogen oxides is in a range of 10 - 1000 ppm, typically 50 - 500 ppm.

15. Method according to any of preceding claims 1 - 14, **characterised in that** the gas flow is a flue gas or an exhaust gas from an industrial boiler, such as pulp or paper mill recovery boiler, incinerator, gas turbine, iron or steel mill process, cement manufacture, petroleum refinery, nitric acid manufacture, or exhaust gas from a marine engine.

Figure 1

Europäisches
Patentamt

European
Patent Office

Office européen
des brevets

# EUROPEAN SEARCH REPORT

Application Number

EP 23 20 0026

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H10 296049 A (SHINETSU HANDOTAI KK; MITSUBISHI KAKOKI KK) 10 November 1998 (1998-11-10) * paragraphs [0005], [0023], [0028], [0041]; figure 1; example 2; table 2 * | 1,3,5-7, 14 | INV. B01D53/56 |
| X | CN 108 671 716 A (UNIV BEIHANG) 19 October 2018 (2018-10-19) * paragraph [0021]; claim 1; figure 1; examples 1-4 * | 1-7, 10-15 | |
| X | CN 110 052 139 A (GUANGDONG J TECH ENVIRONMENTAL PROTECTION TECH CO LTD) 26 July 2019 (2019-07-26) * comparative example 1; figure 1; examples 1-16; table 1 * | 1-15 | |
| A | WO 2016/167708 A1 (LKW TEKNIK AB [SE]) 20 October 2016 (2016-10-20) * page 11, line 21 – page 12, line 32; claim 12; figure 3 * | 1-15 | |
| A | LEE YEAWAN ET AL: "Minimizing the consumption of reducing agents for NOx removal in a wet scrubber without H2S formation", SEPARATION AND PURIFICATION TECHNOLOGY, ELSEVIER SCIENCE, AMSTERDAM, NL, vol. 282, 9 November 2021 (2021-11-09), XP086893039, ISSN: 1383-5866, DOI: 10.1016/J.SEPPUR.2021.120101 [retrieved on 2021-11-09] * sections 3.2.1-3.2.3, 3.3, 3.3.2; figure 1 * | 1-15 | TECHNICAL FIELDS SEARCHED (IPC) B01D |

The present search report has been drawn up for all claims

| Place of search | Date of completion of the search | Examiner |
|---|---|---|
| The Hague | 16 January 2024 | Focante, Francesca |

EPO FORM 1503 03.82 (P04C01)

## ANNEX TO THE EUROPEAN SEARCH REPORT
## ON EUROPEAN PATENT APPLICATION NO.

EP 23 20 0026

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2024

| Patent document cited in search report | | Publication date | Patent family member(s) | | Publication date |
|---|---|---|---|---|---|
| JP H10296049 | A | 10-11-1998 | JP | 3522082 B2 | 26-04-2004 |
| | | | JP | H10296049 A | 10-11-1998 |
| CN 108671716 | A | 19-10-2018 | NONE | | |
| CN 110052139 | A | 26-07-2019 | NONE | | |
| WO 2016167708 | A1 | 20-10-2016 | SE | 1500177 A1 | 15-10-2016 |
| | | | SE | 1700273 A1 | 09-11-2017 |
| | | | WO | 2016167708 A1 | 20-10-2016 |

EPO FORM P0459

For more details about this annex : see Official Journal of the European Patent Office, No. 12/82